# EUROPEAN PATENT APPLICATION

(11) **EP 2 768 134 A1**
(43) Date of publication of application: **20.08.2014**
(21) Application number: 13155817.3
(22) Date of filing: 19.02.2013
(51) Int. Cl.: H02P 9/10, H02P 9/30, H02P 21/00

(54) **Voltage control for a generator of a wind turbine**

(71) Applicant: Siemens Aktiengesellschaft, 80333 München (DE)
(72) Inventor: Deng, Heng, 7330 Brande (DK)

(57) **Abstract**

It is described a method for controlling the operation of an electric generator (110, 210) for a wind turbine (100), wherein an AC power output of the electric generator (110, 210) is fed into a frequency converter (120). The described method comprises controlling the operation of at least one switching device of the frequency converter (120) in such a manner that a peak voltage provided by the electric generator (110, 210) is adjusted to a peak voltage reference value. It is further described a corresponding control device (130) which is configured for carrying out the described control method. Further, it is described a system for transforming mechanical power into electric power and a wind turbine (100) comprising such a control device (130). Furthermore, it is described a computer program for controlling the operation of an electric generator (110, 210) for a wind turbine (100).

## Description

### Field of invention

The present invention generally relates to the technical field of wind turbines. In particular, the present invention relates to a method and to a control device for controlling the operation of an electric generator for a wind turbine. The present invention further relates to a system for transforming mechanical power into electric power and to a wind turbine comprising such a control device. Furthermore, the present invention relates to a computer program for controlling the operation of an electric generator for a wind turbine.

### Art Background

In order to connect a modern variable speed wind turbine to a power grid a so called full scale frequency converter can be used as an interface which converts electric power generated by an electric generator and having a first frequency to electric power received by the power grid and having a second frequency. Thereby, the first frequency may depend on the operational state of the variable speed wind turbine and the second frequency is the predefined frequency of the power grid.

A frequency converter has a generator-side converter module and a grid-side converter module with a DC link capacitor in between. Both generator-side converter modules and grid-side converter modules are power electronics devices comprising insulated-gate bipolar transistors (IGBTs) or other semiconductor switching devices which are typically controlled by Pulse-Width-Modulation (PWM) technique.

Due to a modulation limit and a limited DC link voltage of a frequency converter, the generator voltage must be regulated to a low enough level so that the generator current is still under control. For example, the maximum generator voltage is theoretically 777.9 Volt if the DC link voltage is 1100 Volt. Due to PWM dead time and due to voltage drops at the switching devices, the real achievable generator voltage may be around 750 Volt only.

Generator voltage is normally controlled in a direct-quadrature (dq) rotating frame, in which the AC fundamental generator voltage becomes a DC voltage value. A simple closed-loop PID (Proportional Integral Derivative) controller can be used to regulate the AC fundamental generator voltage. However, the real generator voltage in dq rotating frame is a DC voltage value plus high frequency harmonics (typically at 6 time electrical frequency) because of generator harmonic currents. With a simple PID controller for generator voltage the average value of the generator voltage is controlled to the reference voltage. However, the peak value of the generator voltage can be higher than a modulation limit (e.g. 750 Volt) due to the high frequency harmonics in the generator voltage. This can cause a transient over-modulation of the frequency converter and a lost control of generator current.

There are many unwanted converter trip cases caused by this problem. To avoid unwanted converter trips due to an over-modulation, the average generator voltage reference is normally set to a constant value lower than 750 Volt, for example 710 Volt. This causes a higher total generator/converter current and a lower efficiency because of a corresponding higher field weakening current for lower generator voltage.

More and more multi-winding generators are used for large wind turbines especially for the off-shore market. It is required that a wind turbine can still produce partial power if the frequency converter on one of the generator windings fails. To be able to run with a single winding and multi-winding configurations, a different value for the average voltage reference of the generator is necessary in order to avoid over-modulation. This brings a lot of complexity to a generator control system.

It is mentioned that this issue is more dominant with Permanent Magnet (PM) generators due to flux harmonics and especially with direct drive wind turbines where the PM generator gets very large (typical 4 to 6 meter in diameter and with more than 100 of poles) and where flux harmonics are a challenge.

There may be a need for providing an easy (little complex) but effective control strategy for a generator voltage.

### Summary of the Invention

This need may be met by the subject matter according to the independent claims. Advantageous embodiments of the present invention are described by the dependent claims.

According to a first aspect of the invention there is provided a method for controlling the operation of an electric generator for a wind turbine, wherein an AC power output of the electric generator is fed into a frequency converter. The provided method comprises controlling the operation of at least one switching device of the frequency converter in such a manner that a peak voltage provided by the electric generator is adjusted to a peak voltage reference value.

The described control method is based on the idea that instead of an average value of the electric generator voltage also the peak value of the electric generator voltage can be controlled by following a peak voltage reference value. If the value of the peak voltage instead of the value of the average voltage is under control, a generator voltage controller will automatically adjust a field weakening current to be optimal. This may mean that there is no more waste of current on field weakening. Thereby, the efficiency of electric system comprising the electric generator and the frequency converter can be improved.

The described control method may provide the advantage that unwanted over-voltage situations can be avoided. This holds in particular for large electric generators which are used e.g. for wind turbines.

It is mentioned that a corresponding generator voltage control may be able to automatically control the peak value of the generator voltage to a peak voltage reference value in different winding configurations for electric generators having multiple windings.

According to an embodiment of the invention the at least one switching device of the frequency converter is assigned to an AC/DC converter module of the frequency converter.

The frequency converter may be a full scale frequency converter comprising (a) an AC/DC converter module, (b) a DC bridge with a capacitor and (c) a DC/AC converter module. Thereby, the AC/DC converter module rectifies the power obtained from the electric generator of the wind turbine to a DC power. The DC/AC converter module inverts the DC power to an AC power which is provided via an optional transformer to a power grid. Therefore, the AC/DC converter module is often called a generator-side converter module. Accordingly, the DC/AC converter module is often called a grid-side converter module.

The AC/DC converter module comprises typically many switching devices, at least two switching devices for each phase of a rotary current provided by an electric generator having three-phase systems. The switching devices may be in particular insulated-gate bipolar transistors (IGBTs) or other semiconductor switching devices. The control of the switching devices may be accomplished in particular by a proper Pulse-Width-Modulation (PWM).

According to a further embodiment of the invention controlling the operation of the at least one switching device comprises (a) generating, in a dq rotating reference system, dq voltage command signals for the voltage of the electric generator, (b) transforming the dq voltage command signals into abc voltage command signals of a stationary reference system, and (c) controlling the operation of the at least one switching device based on the abc voltage command signals.

The control of the operation of the at least one switching device based on the abc voltage command signals may comprise a determination of a modulation index by means of a modulator. The modulator may drive the switching device(s) of an AC/DC converter module of the frequency converter with a Pulse-Width-Modulation (PWM) control signal, which apart from the abc voltage command signals may also depend on the measured or calculated value of the actual voltage of the DC link capacitors being connected in between the generator-side AC/DC converter module and the grid-side DC/AC converter module of the frequency converter. The PWM control signal may be defined or characterized by a so called modulation index.

In this respect it is mentioned that a dq transformation between a stationary reference frame and the rotating reference frame of the rotor flux is a common mathematical transformation being often used to simplify the analysis of three-phase electric circuits. In the case of balanced three-phase electric circuits, application of the dq transformation reduces the three AC quantities (e.g. Va, Vb, Vc) to two DC quantities (e.g. Vd, Vq). As a consequence, simplified calculations can be carried out on these imaginary DC quantities before performing the inverse transformation to recover the actual three-phase AC results in the stationary abc reference frame.

According to a further embodiment of the invention generating the dq voltage command signals for the voltage of the electric generator comprises (a) calculating, in the dq rotating reference system, dq current reference signals, and (b) converting the dq current reference signals into the dq voltage command signals.

The conversion between the dq current reference signals and the dq voltage command signals may be realized by means of a current controller. Such a current controller may perform the described conversion in dependency on one or more of the following quantities: The actual current values (for each phase of the electric generator one current value) in the stationary abc reference frame, the actual electrical angle between the rotating dq reference frame and the abc reference frame, and the actual rotational speed of the rotating dq reference frame with respect to the abc reference frame.

According to a further embodiment of the invention calculating the dq current reference signals comprises (a) calculating a first current reference signal in response to the values of a first selection of operating parameters of the electric generator and/or of the frequency converter, and (b) calculating a second current reference signal in response to the values of a second selection of operating parameters of the electric generator and/or of the frequency converter.

The first current reference signal may be used for controlling the voltage of the electric generator. The second current reference signal may be used for controlling the torque which is created by the generator and which is acting on a central axis of a drive train of the wind turbine.

The first selection of operating parameters may comprise (a) the actual power and/or the actual torque of the electric generator, (b) the actual modulation index for the (generator-side converter module of the) frequency converter and/or the actual voltage provided by the electric generator (measured or calculated), and/or (c) the actual rotational speed of the rotating dq reference frame with respect to the stationary abc reference frame.

The second selection of operating parameters may comprise (a) the actual reference value(s) for the power and/or for the torque generated by the electric generator, (b) the actual voltage provided by the electric generator (measured or calculated), (c) the actual voltage of the DC bridge being connected in between the generator-side AC/DC converter module and the grid-side DC/AC converter module of the frequency converter, (d) the actual rotational speed of the rotating dq reference frame with respect to the stationary abc reference frame, and/or (e) the actual power and/or the actual torque of the electric generator.

According to a further embodiment of the invention calculating the first current reference signal in response to the values of the first selection of operating parameters of the electric generator and/or of the frequency converter comprises (a) performing, within a predefined period of time, a peak value calculation of an input signal being selected from the actual modulation index for the frequency converter and/or from the actual voltage being provided by the electric generator, and (b) producing the first current reference signal based (b1) on the calculated peak value and (b2) on a pre-defined reference signal for the modulation index and/or a pre-defined reference signal for the generator voltage.

Thereby, the actual modulation index and/or the actual voltage being provided by the electric generator may be measured directly or indirectly or may be calculated based on other operational parameters of a system comprising the electric generator and the generator-side converter module of the frequency converter.

According to a further embodiment of the invention calculating the first current reference signal in response to the values of the first selection of operating parameters of the electric generator and/or of the frequency converter comprises (a) performing an offset calculation for a signal being indicative for the actual modulation index for the frequency converter and/or for the actual voltage being provided by the electric generator, and (b) producing the first current reference signal based (b1) on the calculated offset, (b2) on a pre-defined reference signal for the modulation index and/or a pre-defined reference signal for the generator voltage, and (b3) on the actual modulation index and/or the actual generator voltage.

The resulting offset value may be fed to a summing unit, wherein the resulting offset value is added to the predefined reference signal for the modulation index and/or the pre-defined reference signal for the generator voltage being provided by the electric generator. Further, the first current reference signal may be produced based on the output of the summing unit and on a filtered signal being generated by means of filtering the actual modulation index and/or the actual generator voltage.

According to a further embodiment of the invention performing the offset calculation comprises filtering the signal being indicative for the actual modulation index for the frequency converter and/or for the actual voltage being provided by the electric generator in such a manner that spectral components corresponding to the actual fundamental electrical frequency of the electric generator are reduced at least partially.

The described filtering can preferably be performed by different adaptive filter concepts, wherein in particular the spectral components corresponding to 6 times, 12 times and 18 times the actual fundamental electrical frequency of the electric generator pass at least partially the respective filter being used for the described filtering procedure. According to a further aspect of the invention there is provided a control device for controlling the operation of an electric generator for a wind turbine, wherein an output of the electric generator is fed into a frequency converter and wherein the control device is configured for carrying out a method as described above.

According to a further aspect of the invention there is provided a system for transforming mechanical power into electric power. The provided system comprises (a) an electric generator, in particular an electric generator of a wind turbine, for providing an AC power output in response to a mechanical power input acting on a rotor of the electric generator, (b) a frequency converter being connected to the electric generator, wherein the frequency converter is configured for receiving the AC power output and for converting the received AC power output into a DC power signal, and (c) a control device described above, wherein the control device is connected to the frequency converter and wherein the control device is configured for controlling the operation of at least one switching device of the frequency converter in such a manner that a peak voltage provided by the electric generator is adjusted to a peak voltage reference value.

According to a further aspect of the invention there is provided a wind turbine comprising a system as described above for transforming mechanical power into electric power as set forth in the preceding claim.

According to a further aspect of the invention there is provided a computer program for controlling the operation of an electric generator for a wind turbine, wherein an AC power output of the electric generator is fed into a frequency converter. The computer program, when being executed by a data processor, is adapted for controlling and/or for carrying out the method as described above.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a geared variable speed wind turbine in accordance with an embodiment of the invention.
- Figure 2: shows the control of a generator-side converter module of a frequency converter.
- Figure 3: shows a first option for the Id reference calculation block shown in Figure 2.
- Figure 4: shows a second option for the Id reference calculation block shown in Figure 2.
- Figure 5: shows a first option for the offset calculation block shown in Figure 4.
- Figure 6: shows a second option for the offset calculation block shown in Figure 4.

### Detailed Description

The illustration in the drawing is schematically. It is noted that in different figures, similar or identical elements or features are provided with reference signs, which are different from the corresponding reference signs only within the first digit. In order to avoid unnecessary repetitions elements or features which have already been elucidated with respect to a previously described embodiment are not elucidated again at a later position of the description.

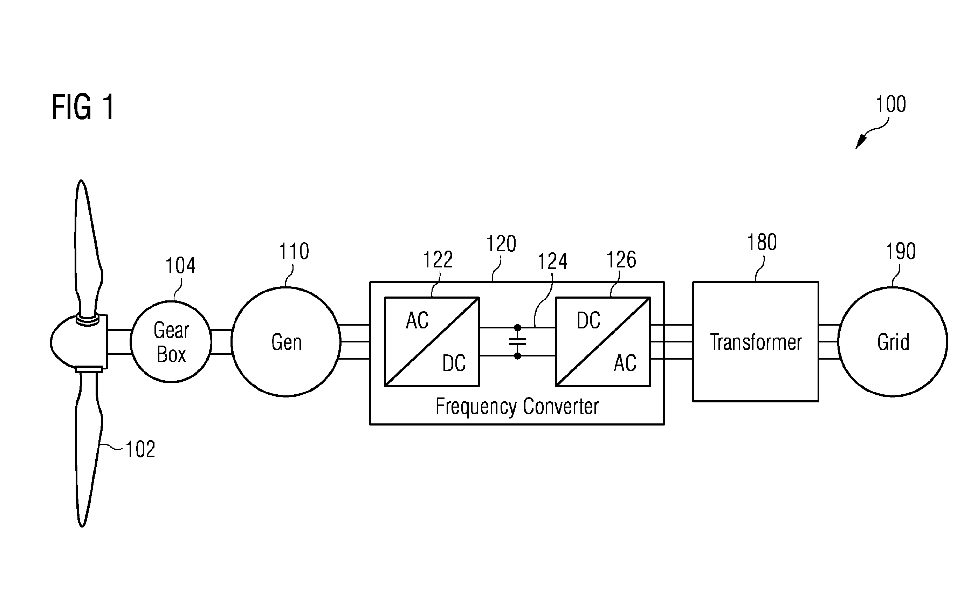

Figure 1 shows in accordance with an embodiment of the invention a geared variable speed wind turbine 100. The wind turbine 100 comprises a rotor 102 which in operation of the wind turbine 100 is driven by wind. The wind turbine 100 further comprises an electric generator 110 being driven by the rotor 102. In between the rotor 102 and the electric generator 110 there is provided a gear box 104. However, it is mentioned that this gear box 104 is an optional component which depending on the specific type of wind turbine 100 may not be necessary. The electric generator 110 outputs an AC power signal, whereby in accordance with the principles of a variable speed wind turbine 100 the frequency of the AC power signal depends on the rotational speed of the rotor 102.

In order to interface the electric generator 110 with an electric power grid 190, there is provided a frequency converter 120. The frequency converter 120 comprises a generator-side AC/DC converter module 122, a DC bridge with a capacitor and a grid-side DC/AC converter module 126. Both the generator-side AC/DC converter module 122 and the grid-side DC/AC converter module 126 comprise non depicted power electronics switching devices made of PWM-controlled IGBTs or other devices. Non depicted controller units control the operation of the switching devices in such a manner that by means of the generator-side AC/DC converter module 122 the AC power signal provided by the electric generator 110 is rectified and by means of the grid-side DC/AC converter module the DC power signal is inverted to an AC power signal being fed to the power grid 190. Thereby, the frequency of this AC power signal corresponds to a predefined frequency of the power grid 190.

As can be seen from Figure 1, according to the embodiment described here, on optional transformer 180 is provided in order to increase the voltage of the inverted AC power signal such that this voltage corresponds to the operating voltage of the power grid 190.

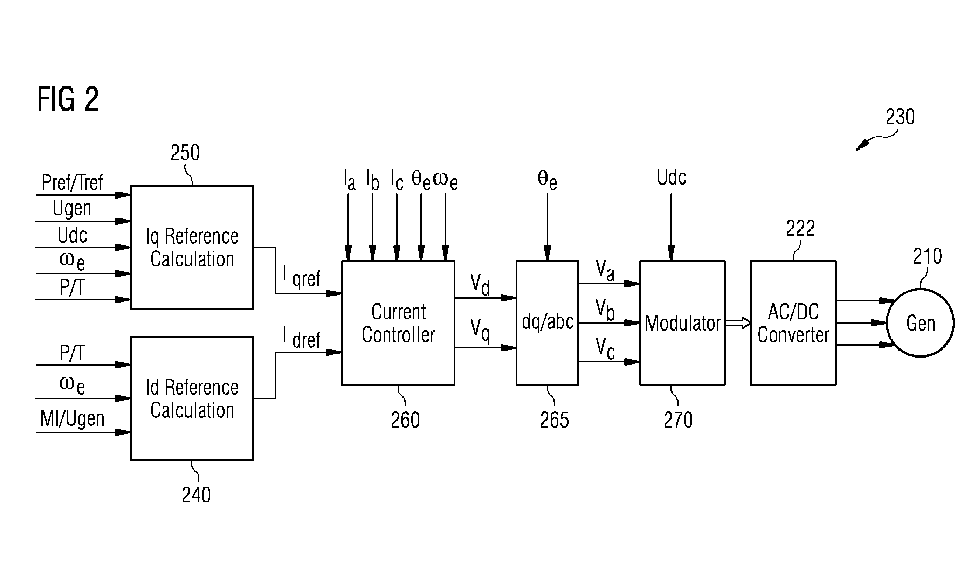

Figure 2 shows the control of a generator-side AC/DC converter module 222 of a frequency converter by means of a generator side controller 230. The generator-side AC/DC converter module 222 is connected to an electric generator 210.

An Id reference calculation block 240 and an Iq reference calculation block 250 are used to calculate in synchronous rotating dq reference frame a fundamental current reference value Idref and a fundamental current reference value Iqref, respectively. The input to the Iq reference calculation block 250 could be at least one of (a) a power reference value Pref and/or a torque reference value Tref, (b) the generator voltage Ugen, (c) the DC bridge voltage Udc, (d) the rotational speed ωe of the rotating dq reference frame, and (e) the actual power P and/or the actual torque T of the generator 210. It is also possible to use some combination of these signals (a) to (e) as inputs to the Iq reference calculation block 250. Thereby, the selected combination may depend on the specific application requirements.

The input for the Id reference calculation block 240 could be (a) the actual power P and/or the actual torque T of the generator 210, (b) the rotational speed ωe of the rotating dq reference frame, and (c) a modulation index MI respectively the generator voltage Ugen. Again, it is also possible to use some combinations of these signals (a) to (c) as inputs.

In this respect it is noted that the modulation index MI is a commonly known value which characterizes the PWM control of the switching devices of the generator-side AC/DC converter module 222. Typically, the modulation index MI in associated in an unambiguous manner with the generator voltage Ugen. For the control procedure described in this document the modulation index MI and/or the generator voltage Ugen can be measured or can be calculated.

With the Id reference calculation block 240 the current reference value Idref could be calculated e.g. by means of a look up table (LUT) describing a minimum torque per ampere (MTPA) control or a generator voltage and/or a modulation index control. It is also possible to use a MTPA control when the generator voltage/modulation index is low and to use a generator voltage/modulation index control when the generator voltage/modulation index is high.

As can be seen from Figure 2, the current reference values Idref and Iqref are fed to a current controller 260. Further inputs to the current controller 260 are the voltages Ia, Ib, Ic of the three different winding systems of the electric generator 210, the actual electrical angle θe between the rotating dq frame and the stationary abc frame and the actual rotational speed of the rotating dq frame with respect to the stationary abc frame.

The current controller 260 shown in Figure 2 may be realized by means of a closed loop feedback regulation of the generator current in dq reference frame. For better dynamic performance and decoupling, also a voltage feedforward may be used in the current controller 260.

As can be further seen from Figure 2, the current controller outputs command voltage signals Vd and Ve for the generator voltage in the dq reference frame. The command voltage signals Vd and Ve are fed to a dq/abc transformation unit 265 which in consideration of the actual electrical angle θe calculates the three command voltage signals Va, Vb and Vc for the generator voltage in the abc stationary frame. Thereby, respectively one of the three command voltage values Va, Vb and Vc is associated with one winding system of the electric generator 210.

The three command voltage signals Va, Vb and Vc are fed to a modulator 270 which in consideration of the actual DC bridge voltage Udc drives the switching devices of the generator-side AC/DC converter module 222.

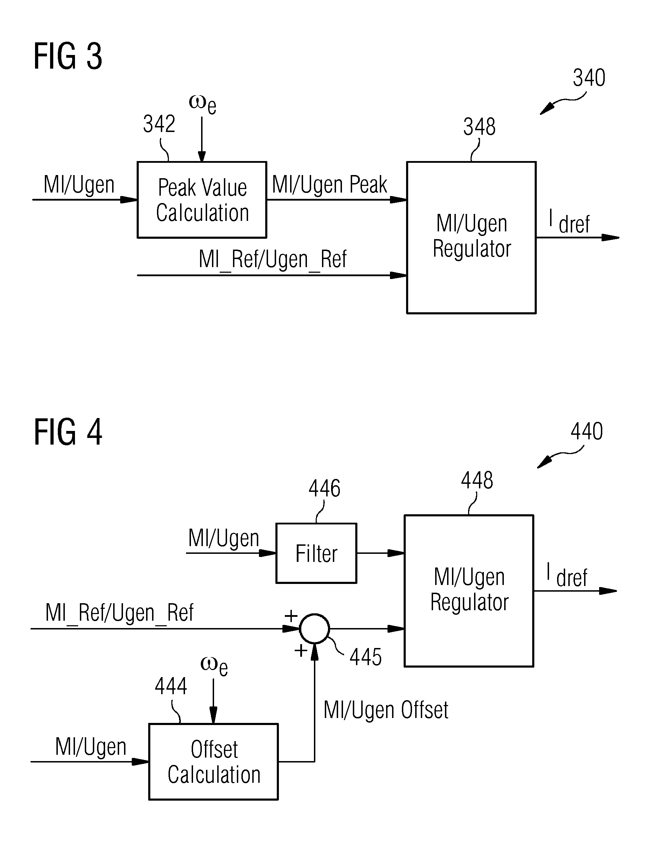

In order to realize a control of the operation of at least one switching device of the frequency converter in such a manner that a peak voltage provided by the electric generator 210 is adjusted to a peak voltage reference value, the Id reference calculation carried out in block 240 has to be realized in a proper way. In this document, with reference to Figures 3 and 4 there are described two preferred options for determining the current reference value Idref. As a preliminary note it is pointed out that the input for the actual power respectively the actual torque of the generator (see Figure 2) is not used because this input is only used when in case of comparatively low voltages a MTPA control is employed.

Figure 3 shows a first preferred option for the Id reference calculation block from Figure 2, which is now denominated with reference numeral 340. As can be seen from Figure 3, the Id reference calculation block 340 comprises a peak value calculation unit 342, which in response to the actual modulation index MI respectively the actual generator voltage Ugen and in further response to the actual rotational speed ωe of the rotating dq reference frame determines the peak value MI/Ugen Peak of the modulation index MI respectively the generator voltage Ugen within a fixed period.

Depending (a) on the determined peak value of the modulation index MI respectively the generator voltage Ugen and (b) on a pre-defined reference signal MI_Ref respectively Ugen_Ref for the modulation index MI respectively for the generator voltage Ugen a regulator 348 produces the above mentioned current reference value Idref. The regulator 348 may be realized e.g. by a proportional/integral (PI) controller.

Figure 4 shows a second preferred option for the Id reference calculation block from Figure 2, which is now denominated with reference numeral 440. The Id reference calculation block 440 comprises an offset calculation unit 444, a summation unit 445, a filter 446 and a regulator 448.

As can be seen from Figure 4, the offset calculation unit 444 determines, based on the actual modulation index MI respectively the actual generator voltage Ugen and in further response to the actual rotational speed ωe of the rotating dq reference frame, an offset signal MI/Ugen Offset for the reference signal for the modulation index respectively for the generator voltage based on measured or calculated modulation index/generator voltage. In the summation unit 445 the offset signal MI/Ugen Offset is added to the above mentioned predefined reference signal MI_Ref respectively Ugen_Ref for the modulation index MI respectively for the generator voltage Ugen. The added signal, which can be seen as to represent a modified reference signal for the modulation index respectively for the generator voltage, is fed from the summation unit 445 to the regulator 448 as a first input. Again, the regulator 448 may be realized e.g. by a proportional/integral (PI) controller.

A second input for the regulator 448 is received from the filter 446 which is used for attenuating high frequency harmonics of the signal for the actual modulation index MI respectively for the actual generator voltage Ugen. Again, the regulator 448 produces the above mentioned current reference value Idref.

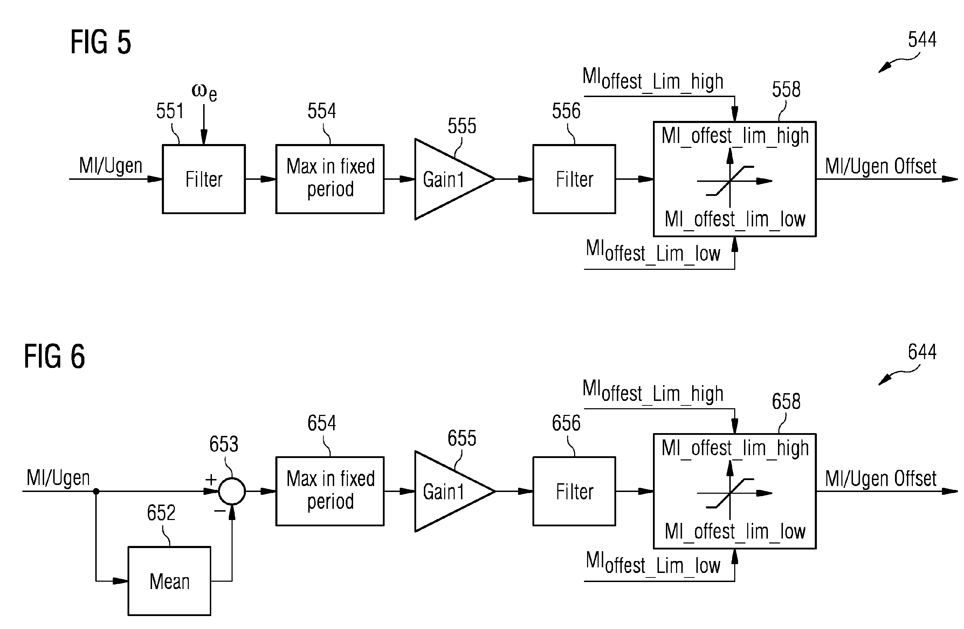

There are many ways to determine the offset signal MI/Ugen Offset. Figure 5 and Figure 6 show two different options for realizing the offset calculation unit 444.

Figure 5 shows a first option for realizing the offset calculation block from Figure 4, which is now denominated with reference numeral 544. The offset calculation block 544 comprises an adaptive filter 551, which under consideration of the actual rotational speed ωe of the rotating dq reference frame is used for attenuating the fundamental frequency from the signal representing the actual modulation index MI respectively the actual generator voltage Ugen. Specifically, the adaptive filter 551, which can be comprise three adaptive band-pass filters, is used to filter out major high frequency harmonics in the signal MI/Ugen. Normally the major harmonics are at 6 times the electrical frequency ωe, at 12 times the electrical frequency ωe and at 18 times electrical frequency ωe. Therefore, it is necessary to use the electrical frequency ωe of the generator respectively the rotational speed ωe of the rotating dq reference frame in order to determine the filter parameters for the adaptive filter 551. However, it is pointed out that it is also possible to use a normal high-pass filter with fixed parameters as the filter 551. Descriptive speaking, the major harmonics or the AC components in the modulation index/generator voltage are achieved after the filter 551.

As can be seen from Figure 5, a maximum detection unit 554 is used to find the maximum value of these harmonics within a fixed period T. An amplifier 555 providing a gain is connected downstream with respect to the maximum detection unit 554. With this amplifier 555 the offset can be adjusted. A low pass filter 556, which is connected downstream with respect to the amplifier 555, is used for smoothing the output signal of the amplifier 555. Thereby, a fast change of the offset can be effectively avoided. A saturation unit 558 is used to limit the possible range of the resulting offset signal MI/Ugen Offset between a lower limit MI offset_lim_low and a higher limit MI offset_lim_high.

Figure 6 shows the second option for realizing the offset calculation block from Figure 4, which is now denominated with reference numeral 644. In order to isolate the harmonics of the signal representing the actual modulation index MI respectively the actual generator voltage Ugen, the mean value of this signal MI/Ugen is calculated by means of a mean value determination unit 652 and subtracted from the original signal MI/Ugen by means of a subtraction unit 653. The other components, i.e. the maximum detection unit 654, the amplifier 655, the low-pass filter 656 and the saturation unit 658 are the same as in option 1 depicted in Figure 5.

With the control scheme described in this document the peak value of the signal for the modulation index MI respectively for the generator voltage Ugen will follow the corresponding reference signal (MI_Ref respectively Ugen_Ref) for the modulation index MI respectively for the generator voltage Ugen. Thereby, the risks for an unwanted over-modulation and/or for losing a current control are effectively avoided. In the end, the stop time for a wind turbine due to converter trips can be significantly reduced.

Further, the control scheme described in this document has the following advantages:
- The total current of the electric generator and the converter can be reduced.
- The efficiency of the electric generator and the converter can be improved.
- Realizing the described control scheme causes no additional costs because there are no change requirements for the hardware of components which are already used in known wind turbines.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method for controlling the operation of an electric generator (110, 210) for a wind turbine (100), wherein an AC power output of the electric generator (110, 210) is fed into a frequency converter (120), the method comprising
controlling the operation of at least one switching device of the frequency converter (120) in such a manner that a peak voltage provided by the electric generator (110, 210) is adjusted to a peak voltage reference value.

2. The method as set forth in the preceding claim, wherein the at least one switching device of the frequency converter (120) is assigned to an AC/DC converter module (122, 222) of the frequency converter (120).

3. The method as set forth in any one of the preceding claims, wherein
controlling the operation of the at least one switching device comprises
generating, in a dq rotating reference system, dq voltage command signals (Vd, Vq) for the voltage of the electric generator,
transforming the dq voltage command signals (Vd, Vq) into abc voltage command signals (Va, Vb, Vc) of a stationary reference system, and
controlling the operation of the at least one switching device based on the abc voltage command signals (Va, Vb, Vc).

4. The method as set forth in the preceding claim, wherein generating the dq voltage command signals (Vd, Vq) for the voltage of the electric generator (110, 210) comprises
calculating, in the dq rotating reference system, dq current reference signals (Idref, Iqref), and
converting the dq current reference signals (Idref, Iqref) into the dq voltage command signals.

5. The method as set forth in the preceding claim, wherein calculating the dq current reference signals (Idref, Iqref) comprises
calculating a first current reference signal (Idref) in response to the values of a first selection of operating parameters of the electric generator (110, 210) and/or of the frequency converter (120), and
calculating a second current reference signal (Iqref) in response to the values of a second selection of operating parameters of the electric generator (110, 210) and/or of the frequency converter (120).

6. The method as set forth in the preceding claim 5, wherein calculating the first current reference signal (Idref) in response to the values of the first selection of operating parameters of the electric generator (110, 210) and/or of the frequency converter (120) comprises
performing, within a predefined period of time, a peak value calculation of an input signal being selected from the actual modulation index (MI) for the frequency converter (120) and/or from the actual voltage (Ugen) being provided by the electric generator (110, 210), and
producing the first current reference signal (Idref) based (a) on the calculated peak value (MI/Ugen Peak) and (b) on a pre-defined reference signal (MI_Ref) for the modulation index (MI) and/or a pre-defined reference signal (Ugen_Ref) for the generator voltage (Ugen).

7. The method as set forth in the preceding claim 5, wherein calculating the first current reference signal (Idref) in response to the values of the first selection of operating parameters of the electric generator (110, 210) and/or of the frequency converter (120) comprises
performing an offset calculation for a signal being indicative for the actual modulation index (MI) for the frequency converter and/or for the actual voltage (Ugen) being provided by the electric generator (110, 210), and
producing the first current reference signal (Idref) based (a) on the calculated offset (MI/Ugen Offset), (b) on a pre-defined reference signal (MI_Ref) for the modulation index (MI) and/or a pre-defined reference signal (Ugen_Ref) for the generator voltage (Ugen), and (c) on the actual modulation index (MI) and/or the actual generator voltage (Ugen).

8. The method as set forth in the preceding claim, wherein performing the offset calculation comprises
filtering the signal being indicative for the actual modulation index for the frequency converter (120) and/or for the actual voltage being provided by the electric generator (110, 210) in such a manner that spectral components corresponding to the actual fundamental electrical frequency of the electric generator (110, 210) are reduced at least partially.

9. A control device (230) for controlling the operation of an electric generator (110, 210) for a wind turbine (100), wherein an output of the electric generator is fed into a frequency converter (120) and wherein the control device (230) is configured for carrying out a method as set forth in any one of the preceding claims.

10. A system for transforming mechanical power into electric power, the system comprising
an electric generator (110, 210), in particular an electric generator (110, 210) of a wind turbine (100), for providing an AC power output in response to a mechanical power input acting on a rotor of the electric generator (110, 210),
a frequency converter (120) being connected to the electric generator (110, 210), wherein the frequency converter (120) is configured for receiving the AC power output and for converting the received AC power output into a DC power signal, and
a control device (230) as set forth in the preceding claim, wherein the control device (230) is connected to the frequency converter (120) and
wherein the control device (230) is configured for controlling the operation of at least one switching device of the frequency converter (120) in such a manner that a peak voltage provided by the electric generator (110, 210) is adjusted to a peak voltage reference value.

11. A wind turbine (100) comprising
a system for transforming mechanical power into electric power as set forth in the preceding claim.

12. A computer program for controlling the operation of an electric generator (110, 210) for a wind turbine (100), wherein an AC power output of the electric generator (110, 210) is fed into a frequency converter (120), the computer program, when being executed by a data processor, is adapted for controlling and/or for carrying out the method as set forth in any one of the claims 1 to 8.
